# FASCICULE DE BREVET EUROPEEN

(11) **EP 1 598 241 B1**
(45) Date de publication et mention de la délivrance du brevet: **27.06.2007**
(21) Numéro de dépôt: 05300356.2
(22) Date de dépôt: 04.05.2005
(51) Int. Cl.: B60R 13/02, B62D 25/14, B62D 27/06

(54) **Agencement à l'intérieur d un véhicule automobile d'un élement d'habillage sur un support**
Anordnung eines innenverkleidungsteils für Fahrzeuge
Arrangement of a trim element on its support inside of a vehicle

(30) Priorité: 18.05.2004 FR 0450976
(43) Date de publication de la demande: 23.11.2005
(73) Titulaire: Renault s.a.s., 92100 Boulogne Billancourt (FR)
(72) Inventeur: Bouas, Patrick, 91210, Draveil (FR); Massa, Xavier, 95110, Sannois (FR)

(56) Documents cités:
- DE-U- 29 914 283
- FR-A- 2 457 404
- US-A- 5 902 007

## Description

L'invention concerne un agencement à l'intérieur d'un véhicule automobile d'un élément d'habillage sur un support comportant au moins une languette de fixation souple.

L'invention concerne plus particulièrement un agencement de tableau de bord sur un support.

Pour le montage sur un support d'éléments d'habillage tels que des tableaux de bord, on doit tenir compte de nombreuses contraintes comme par exemple le faible espace disponible autour de l'élément et l'accès difficile à l'élément pour l'opérateur. Le procédé de montage doit donc être simple et rapide. Il faut aussi que les moyens de fixation de l'élément sur le support puissent supporter le poids de l'élément, qui dans le cas d'un tableau de bord peut être important. Enfin les conditions auxquelles seront soumises l'élément peuvent avoir un impact sur les moyens de fixation. Par exemple un tableau de bord fixé sur une planche de bord peut être soumis à des températures importantes qui risquent de provoquer une dilatation ou une déformation des moyens de fixation et à terme une chute de l'élément ou bien des jeux entre l'élément et le support ou la planche de bord.

On connaît par la publication US-A-2004/0026952 un agencement de tableau de bord sur un support, dans lequel plusieurs pattes de fixation du support coopèrent avec des ouvertures ménagées sur le bord du tableau de bord. Cet agencement présente des inconvénients. Dans le cas où le support et le tableau de bord sont assez éloignés, les pattes doivent être suffisamment longues. Le tableau de bord se trouve alors en porte-à-faux et les pattes de fixation risquent de se déformer voire de plier sous le poids du tableau de bord. Des températures importantes risquent également de provoquer une déformation des pattes.

Afin de pallier ces inconvénients. l'invention a pour objet un agencement à l'intérieur d'un véhicule automobile d'un élément d'habillage sur un support dont le montage est simple et rapide.

L'invention a aussi pour objet un agencement d'un élément d'habillage sur un support limitant les jeux entre le support et l'élément ainsi que les risques de chute de l'élément.

A cet effet, l'invention propose un agencement à l'intérieur d'un véhicule automobile d'un élément sur un support du type cité ci-dessus, caractérisé en ce que l'élément comporte au moins une deuxième languette de fixation souple, apte à coopérer avec la première languette de Fixation, et au moins une patte rigide s'étendant dans un plan sensiblement parallèle à celui de la deuxième languette, de façon que la première languette se trouve entre la deuxième languette et la patte rigide lorsque l'élément est en position fixée.

Selon d'autres caractéristiques de l'invention:
- La première languette comporte un moyen d'accrochage apte à coopérer avec une ouverture de la deuxième languette.
- Le point de fixation entre la première languette et la deuxième languette se trouve sensiblement à mi-chemin entre le support et l'élément.
- Une face supérieure de la patte rigide est inclinée de façon à faciliter l'insertion de la première languette entre la deuxième languette et la patte rigide.
- Une face inférieure de la première languette comporte un ergot qui coopère avec la face supérieure de la patte rigide.
- La patte rigide est un moyen de guidage de la première languette.
- Une partie supérieure de l'élément comporte la deuxième languette de fixation et en ce qu'une partie inférieure de l'élément est montée à rotation autour d'un axe orienté selon une direction perpendiculaire à celle de la languette.
- L'élément d'habillage est un tableau de bord.

D'autres caractéristiques et avantages de l'invention apparaîtront à la lecture de la description d'exemples de réalisation d'un agencement d'un tableau de bord dur un support en référence au dessin annexé dans lequel:
- La figure 1 est une vue latérale d'un agencement de tableau de bord sur un support selon l'invention.

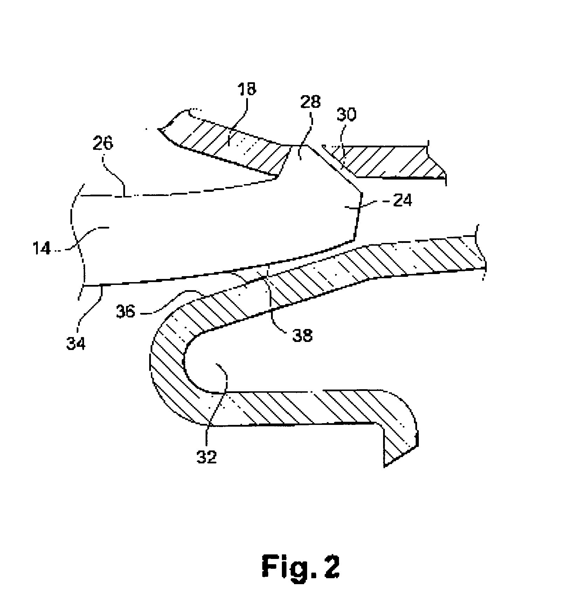

- La figure 2 est une vue d'un détail de l'agencement de la figure 1.

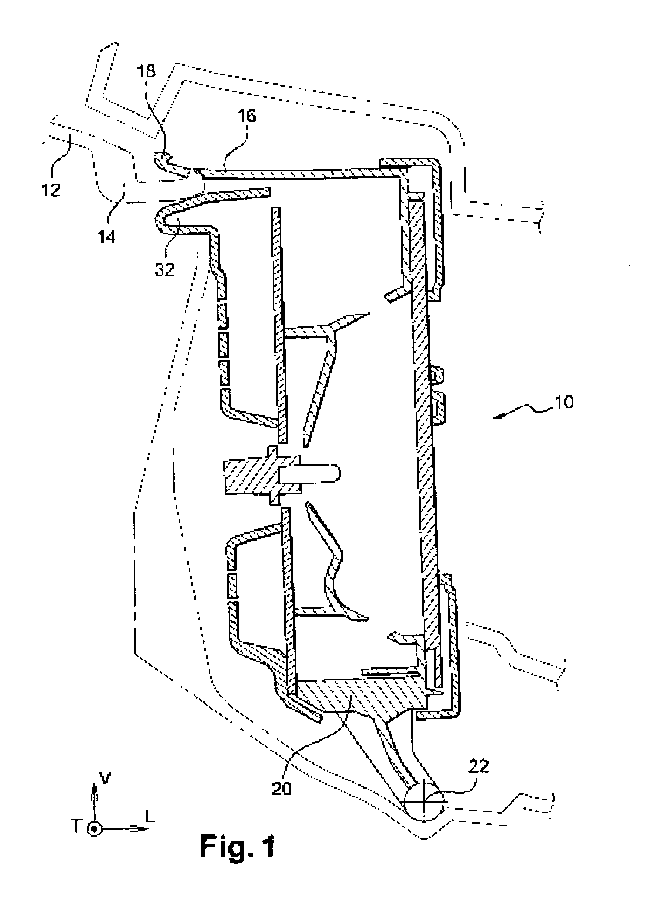

Dans la description qui suit, nous prendrons à titre non limitatif une orientation longitudinale : verticale et transversale indiquée par r le trièdre L, V, T de la figure 1.

Des éléments identiques ou analogues sont désignés par les mêmes chiffres de référence.

Tel que représenté a la figure 1, un élément d'habillage 10 tel qu'un tableau de bord, par exemple, est agencé sur un support 12 à l'intérieur d'un véhicule automobile (non représenté).

Le support 12 comporte au moins une première languette de fixation souple 14 d'orientation globalement horizontale. Une partie arrière supérieur 16 du tableau de bord 10 comporte au moins une deuxième languette de fixation souple 18 destinée à coopérer avec la première re languette de fixati on 14.

Dans l'agencement décrit ici, une partie inférieure 20 du tableau de bord 10 est montée à rotation autour d'un axe transversal 22. Cependant, l'invention pourrait aussi concerner un tableau de bord dont la partie supérieure et la partie inférieure seraient munies de clips de fixation. Le tableau de bord serait alors monté par translation.

Une extrémité 24 d une face supérieure 26 de la première languette souple 14 comporte un moyen d'accrochage 28 apte à s'encliqueter automatiquement dans une ouverture 30 ménagée dans la deuxième languette souple 18,

Ainsi, lorsqu'un opérateur procède au montage du tableau de bord 10 sur son support 12, il le fait pivoter autour de l'axe transversal 22 en direction du support 12 jusqu'à ce que le moyen d'accrochage 28 de la première languette 14 pénètre automatiquement à l'intérieur de l'a uve rtu re 30 de la deuxième languette 18.

La taille des languettes 14,18 est optimisée de façon que le point de fixation se situe sensiblement à mi-chemin entre le tableau de bord 10 et le support 12. Ainsi, dans le cas où la distance entre le support 12 et le tableau de bord 10 est importante, la déformation de la fixation est réduite par rapport à une languette unique.

Cependant afin d'augmenter la rigidité de la fixation, il est prévu sur le tableau de bord 10 une patte rigide 32, agencée sous la deuxième languette souple 18, de façon que, lorsque le tableau de bord 10 est en position fixée, la première languette souple 14 se trouve entre la patte rigide 32 et la deuxième languette 18.

Sous le poids du tableau de bord 10 ou sous l'effet de la température, les languettes 14, 18 vont avoir tendance à se déforme vers le bas. La patte rigide 32 permet ainsi de rigidifier la fixation car une face inférieure 34 de la première languette 14 prend appui sur une face supérieure 36 de la patte rig ide 32.

Avantageusement, la face inférieure 34 de la première languette 14 est munie d un ergot 38 qui coopère avec la surface supérieure 36 de la patte rigide 32 de façon à rattraper tout jeu entre la première languette 14 et la patte rigide 32,

De plus la patte rigide 32 permet d'empêcher une désolidarisation accidentelle des deux languettes 14,18.

Enfin, la patte rigide 32 peut aussi former un moyen de guidage de la première languette 14 lors du montage du tableau de bord 10.

Avantageusement la face supérieure 36 de la patte rigide 32 est inclinée de façon à faciliter l'insertion de la première languette 14 lors du montage de la planche de bord 10.

## Revendications

1. Agencement à l'intérieur d'un véhicule automobile d'un élément d'habillage {10} sur un support (12) comportant au moins une première languette de fixation souple (14), **caractérise en ce que** l'élément (10) comporte au moins une deuxième languette de fixation souple (18), apte à coopérer avec la première languette de fixation (14), et au moins une patte rigide (32) s'étendant dans un plan sensiblement parallèle à celui de la deuxième languette (18), de façon que la première languette (14) se trouve entre la deuxième languette (18) et la patte rigide (32) lorsque l'élément (10) est en position fixée.

2. Agencement d'un élément (10) selon la revendication 1, **caractérisé en ce que** la première languette (14) comporte un moyen d'accrochage (28) apte à coopérer avec une ouverture (30) de la deuxième languette (18).

3. Agencement d'un élément (10) selon la revendication 1, **caractérisé en ce que** le point de fixation entre la première languette (14) et la deuxième languette (18) se trouve sensiblement à mi-chemin entre le support (12) et l' élément (10).

4. Agencement d'un élément (10) selon la revendication 1, **caractérisé en ce qu**'une face supérieure (36) de la patte rigide (32) est inclinée de façon à faciliter l'insertion de la première languette (14) entre la deuxième languette (18) et la patte rigide (32).

5. Agencement d'un élément (10) selon l'une quelconque des revendications précédentes, **caractérisé en ce qu'**une face inférieure (34) de la première languette (14) comporte un ergot (38) qui coopère avec la face supérieure (36) de la patte rigide (32).

6. Agencement d'un élément (10) selon l'une quelconque des revendications précédentes, **caractérisé en ce que** la patte rigide (32) est un moyen de guidage de la première languette (14).

7. Agencement d'un élément (10) selon l'une quelconque des revendications précédentes, **caractérisé en ce qu**'une partie supérieure (16) de l'élément (10) comporte la deuxième languette de fixation (18) et en ce qu'une partie inférieure (20) de l'élément (10) est montée à rotation autour d'un axe (22) orienté selon une direction perpendiculaire à celle de la languette (18).

8. Agencement d'un élément (10) selon l'une quelconque des revendications précédentes, **caractérisé en ce que** l'élément (10) est un tableau de bord.

## Claims

1. Arrangement inside a motor vehicle of a trim element (10) on a supporting mount(12) comprising at least a first flexible fastening tongue (14), **characterized in that** the element (10) comprises at least a second flexible fastening tongue (18) able to collaborate with the first fastening tongue (14) and at least one rigid lug (32) running in a plane substantially parallel to that of the second tongue, (18) such that the first tongue (14) lies between the second tongue (18) and the rigid lug (32) when the element (10) is in the fastened position.

2. Arrangement of an element (10) according to Claim 1, **characterized in that** the first tongue (14) comprises a catching means (28) able to collaborate with an opening (30) in the second tongue (18).

3. Arrangement of an element (10) according to Claim 1, **characterized in that** the point at which the first tongue (14) and the second tongue (18) are fastened together lies more or less midway between the supporting mount (12) and the element (10).

4. Arrangement of an element (10) according to Claim 1, **characterized in that** an upper face (36) of the rigid lug (32) is inclined in such a way as to make it easier to insert the first tongue (14) between the second tongue (18) and the rigid lug (32).

5. Arrangement of an element (10) according to any one of the preceding claims, **characterized in that** an underside (34) of the first tongue (14) comprises a nib (38) which collaborates with the topside (36) of the rigid lug (32).

6. Arrangement of an element (10) according to any one of the preceding claims, **characterized in that** the rigid lug (32) is a means of guiding the first tongue (14).

7. Arrangement of an element (10) according to any one of the preceding claims, **characterized in that** an upper part (16) of the element (10) comprises the second fastening tongue (18) and **in that** a lower part (20) of the element (10) is mounted such that it can rotate about an axis (22) directed perpendicular to the direction of the tongue (18).

8. Arrangement of an element (10) according to any one of the preceding claims, **characterized in that** the element (10) is an instrument panel.

## Patentansprüche

1. Anordnung eines Verkleidungsteils (10) im Innern eines Kraftfahrzeugs auf einer Stütze (12) mit mindestens einer ersten nachgiebigen Befestigungslasche (14), **dadurch gekennzeichnet, dass** das Element (10) mindestens eine zweite nachgiebige Befestigungslasche (18), die mit der ersten Befestigungslasche (14) zusammenwirken kann, und mindestens eine starre Klaue (32) aufweist, die sich in einer im Wesentlichen parallel zur Ebene der zweiten Lasche (18) verlaufenden Ebene erstreckt, so dass sich die erste Lasche (14) zwischen der zweiten Lasche (18) und der starren Klaue (32) befindet, wenn das Element (10) in der befestigten Position ist.

2. Anordnung eines Elements (10) nach Anspruch 1, **dadurch gekennzeichnet, dass** die erste Lasche (14) ein Einhängemittel (28) aufweist, das mit einer Öffnung (30) der zweiten Lasche (18) zusammenwirken kann.

3. Anordnung eines Elements (10) nach Anspruch 1, **dadurch gekennzeichnet, dass** sich der Befestigungspunkt zwischen der ersten Lasche (14) und der zweiten Lasche (18) im Wesentlichen auf halbem Wege zwischen der Stütze (12) und dem Element (10) befindet.

4. Anordnung eines Elements (10) nach Anspruch 1, **dadurch gekennzeichnet, dass** eine obere Fläche (36) der starren Klaue (32) so geneigt ist, dass das Einfügen der ersten Lasche (14) zwischen der zweiten Lasche (18) und der starren Klaue (32) erleichtert wird.

5. Anordnung eines Elements (10) nach einem der vorhergehenden Ansprüche, **dadurch gekennzeichnet, dass** eine untere Fläche (34) der ersten Lasche (14) einen Nocken (38) aufweist, der mit der oberen Fläche (36) der starren Klaue (32) zusammenwirkt.

6. Anordnung eines Elements (10) nach einem der vorhergehenden Ansprüche, **dadurch gekennzeichnet, dass** die starre Klaue (32) ein Führungsmittel der ersten Lasche (14) ist.

7. Anordnung eines Elements (10) nach einem der vorhergehenden Ansprüche, **dadurch gekennzeichnet, dass** ein oberer Teil (16) des Elements (10) die zweite Befestigungslasche (18) aufweist und dass ein unterer Teil (20) des Elements (10) drehbar um eine Achse (22) montiert ist, die nach einer senkrecht zur Richtung der Lasche (18) verlaufenden Richtung ausgerichtet ist.

8. Anordnung eines Elements (10) nach einem der vorhergehenden Ansprüche, **dadurch gekennzeichnet, dass** das Element (10) eine Instrumententafel ist.
